Europäisches Patentamt

European Patent Office

Office européen des brevets

(19)

(11) Veröffentlichungsnummer: **0 529 360 B1**

(12) **EUROPÄISCHE PATENTSCHRIFT**

(45) Veröffentlichungstag der Patentschrift: **18.10.95**

(51) Int. Cl.⁶: **C08F 2/32**

(21) Anmeldenummer: **92113316.1**

(22) Anmeldetag: **05.08.92**

(54) **Wasser-in-Öl-Polymeremulsionen.**

(30) Priorität: **21.08.91 DE 4127571**
**26.11.91 DE 4138791**

(43) Veröffentlichungstag der Anmeldung:
**03.03.93 Patentblatt 93/09**

(45) Bekanntmachung des Hinweises auf die
Patenterteilung:
**18.10.95 Patentblatt 95/42**

(84) Benannte Vertragsstaaten:
**BE DE ES FR GB IT NL**

(56) Entgegenhaltungen:
**EP-A- 0 208 217**
**FR-A- 2 333 815**

(73) Patentinhaber: **BASF Aktiengesellschaft**
**Carl-Bosch-Strasse 38**
**D-67063 Ludwigshafen (DE)**

(72) Erfinder: **Moench, Dietmar, Dr.**
**Haselnussweg 9**
**W-6940 Weinheim (DE)**
Erfinder: **Hartmann, Heinrich, Dr.**
**Weinheimer Strasse 46**
**W-6703 Limburgerhof (DE)**
Erfinder: **Wekel, Hans-Ulrich, Dr.**
**Bruchstrasse 66**
**W-6701 Ellerstadt (DE)**

**Beschreibung**

Die Erfindung betrifft Wasser-in-Öl-Polymeremulsionen, bei denen die Öl-phase zu mindestens 50 % aus Ölen pflanzlicher oder tierischer Herkunft besteht und die alkoxylierte Umsetzungsprodukte von Glycidylethern mit mehrwertigen Alkoholen als Wasser-in-Öl-Emulgator enthalten.

Wasser-in-Öl-Polymeremulsionen von wasserlöslichen Polymerisaten sind aus der US-A-3 284 393 bekannt. In der US-A-4 059 552 werden wasserquellbare Polymerisate beschrieben, die nach dem Verfahren der Emulsionspolymerisation hergestellt werden und eine Teilchengröße von weniger als 4 $\mu$m haben. Die Ölphase der Wasser-in-Öl-Polymeremulsion besteht dabei aus aliphatischen, aromatischen oder chlorierten Kohlenwasserstoffen sowie aus Mischungen von verschiedenen mit Wasser praktisch nicht mischbaren Kohlenwasserstoffen. Um die Polymeren einer Wasser-in-Öl-Polymeremulsion in die wäßrige Phase zu überführen, bringt man gemäp der Lehre der US-A-3 624 019 die Wasser-in-Öl-Polymeremulsionen in Gegenwart von Netzmitteln mit Wasser in Berührung. Hierbei wird die Ölphase im zugesetzten Wasser emulgiert.

Die GB-B-1 562 417 betrifft die Herstellung von sedimentationsstabilen Wasser-in-Öl-Emulsionen von Polyacrylamiden. Als Wasser-in-Öl-Emulgatorverwendet man hierbei alkoxylierte Umsetzungsprodukte von Glycidylethern mit mehrwertigen Alkoholen.

Aus der EP-B-0 045 720 sind u.a. Wasser-in-Öl-Emulsionen von Polymerisaten aus wasserlöslichen monoethylenisch ungesättigten kationischen Monomeren bekannt. Gemäß den Angaben in der Beschreibung können auch Öle tierischer und pflanzlicher Herkunft die Ölphase der Wasser-in-Öl-Polymeremulsion bilden, jedoch wird in allen Beispielen ein verzweigtes Paraffin als Ölphase verwendet.

Aus der DE-B-3 302 069 sind polymerisat- und tensidhaltige Präparate bekannt, die als Wasser-in-Öl-Polymeremulsion vorliegen und bei denen die Ölphase der Emulsion auch aus vegetabilen und tierischen Ölen, d.h. im wesentlichen Triglyceriden, bestehen kann. In den Beispielen dieser Veröffentlichung werden jedoch ausschlieplich Kohlenwasserstoffe als Ölphase verwendet.

Die DE-B-3 524 950 betrifft umweltfreundliche Flockungsmittelorganosole, die als Ölphase biologisch abbaubare aliphatische Dicarbonsäureester, wie beispielsweise Bis(2-ethylhexyl)adipat enthalten. Produkte dieser Art werden in großtechnischen Synthesen wirtschaftlich und mit gleichbleibender Qualität hergestellt. Sie sind außerdem biologisch leicht abbaubar. Gemäß den Angaben in dieser Veröffentlichung ist die Verwendung von pflanzlichen oder tierischen Ölen als Ölphase von Wasser-in-Öl-Polymeremulsionen nachteilig, weil die Naturprodukte uneinheitlich sind und in ihrer Zusammensetzung schwanken, was sich auf die Qualität der Organosole und deren Verwendung als Flockungsmittel ungünstig auswirkt. Wie im folgenden anhand von Vergleichsbeispielen gezeigt wird, führt die Verwendung von Ölen pflanzlicher Herkunft als Ölphase bei der Herstellung von Wasser-in-Öl-Polymeremulsionen zu technischen Schwierigkeiten, weil die Wasser-in-Öl-Polymeremulsionen hohe Koagulatanteile aufweisen oder außerordentlich schlecht filtrierbar sind.

Der Erfindung liegt die Aufgabe zugrunde, koagulatfreie bzw. nur wenig Koagulat enthaltende und gut verarbeitbare Wasser-in-Öl-Polymeremulsionen bereitzustellen, deren Ölphase biologisch abbaubar ist.

Die Aufgabe wird erfindungsgemäß gelöst mit Wasser-in-Öl-Polymeremulsionen,die in einer kontinuierlichen, mit Wasser praktisch nicht mischbaren organischen Phase fein verteilte wasserlösliche oder wasserquellbare Polymerisate, einen Wasser-in-Öl-Emulgator und gegebenenfalls Netzmittel enthalten, wenn die kontinuierliche organische Phase zu mindestens 50 Gew.-% aus einem Öl pflanzlicher oder tierischer Herkunft besteht und als Wasser-in-Öl-Emulgator Verbindungen enthält, die durch Umsetzung von

(A) $C_{10}$- bis $C_{22}$-Fettalkoholen mit Epichlorhydrin im Molverhältnis 1:0,5 bis 1:1,5 zu Glycidylethern,

(B) Reaktion der Glycidylether mit (1) gesättigten, 2 bis 6 OH-Gruppen enthaltenden $C_2$- bis $C_6$-Alkoholen oder (2) deren Monoether mit $C_{10}$- bis $C_{22}$-Fettalkoholen, im Molverhältnis Glycidylether zu (1) oder (2) von 1:0,5 bis 1:6 in Gegenwart von Säuren oder Basen und

(C) Alkoxilierung der Reaktionsprodukte gemäß (B) mit mindestens einem $C_2$- bis $C_4$-Alkylenoxid im Molverhältnis 1:1 bis 1:6

erhältlich sind, wobei gegebenenfalls 5 bis 95 Gew.-% der genannten Wasser-in-Öl-Emulgatoren durch andere Wasser-in-Öl-Emulgatoren ersetzt sind. Die anderen Wasser-in-Öl-Emulgatoren werden im folgenden mit Wasser-in-Öl-Emulgatoren II bezeichnet.

Gegenstand der Erfindung ist außerdem ein Verfahren zur Herstellung der oben beschriebenen Wasser-in-Öl-Polymeremulsionen, bei denen man wasserlösliche monoethylenisch ungesättigte Monomere allein oder zusammen mit Vernetzern und/oder gegebenenfalls wasserunlöslichen monoethylenisch ungesättigten Monomeren mit Wasser-in-Öl-Emulgatoren, die durch Umsetzung von

(A) $C_{10}$- bis $C_{22}$-Fettalkoholen mit Epichlorhydrin im Molverhältnis 1:0,5 bis 1:1,5 zu Glycidylethern,

(B) Reaktion der Glycidylether mit (1) gesättigten, 2 bis 6 OH-Gruppen enthaltenden $C_2$- bis $C_6$-Alkoholen oder (2) deren Monoether mit $C_{10}$- bis $C_{22}$-Fettalkoholen, im Molverhältnis Glycidylether zu (1) oder (2) von 1:0,5 bis 1:6 in Gegenwart von Säuren oder Basen und

(C) Alkoxilierung der Reaktionsprodukte gemäß (B) mit mindestens einem $C_2$- bis $C_4$-Alkylenoxid im Molverhältnis 1:1 bis 1:6

erhältlich sind, wobei gegebenenfalls 5 bis 95 Gew.-% der genannten Wasser-in-Öl-Emulgatoren durch andere Wasser-in-Öl-Emulgatoren ersetzt sind, in einer organischen Phase emulgiert, die zu mindestens 50 Gew.-% aus einem Öl pflanzlicher oder tierischer Herkunft besteht und die Monomeren der Emulsion in Gegenwart von Initiatoren und gegebenenfalls Netzmitteln polymerisiert.

Die Ölphase der Wasser-in-Öl-Polymeremulsionen besteht zu mindestens 50, vorzugsweise zu 100 % aus einem Öl pflanzlicher oder tierischer Herkunft. Bei diesen Ölen kann es sich um denaturierte bzw. raffinierte Produkte handeln. Hauptbestandteile der natürlichen Öle sind in erster Linie Triglyceride, deren Carbonsäureteil sich von ein- oder mehrfach ethylenisch ungesättigten sowie von gesättigten $C_{10}$- bis $C_{30}$-Fettsäuren ableitet. Geeignete pflanzliche Öle sind beispielsweise Olivenöl, Safloröl, Sojaöl, Erdnußöl, Cottonöl, Rüböl, Sonnenblumenöl, Kaffeeöl, Leinöl und deren Gemische. Als tierische Öle kommen Fischöle in Betracht, z.B. Sardinenöl, Heringsöl, Lachsöl, Haifischleberöl und Walfischtran. Außer den Fischölen kommen als Ölphase Talgöl, Knochenöl, Klauenöl und Schmalzöl in Betracht. Sowohl die reinen Öle als auch Mischungen beliebiger Öle können die Ölphase der Wasser-in-Öl-Polymeremulsionen bilden. Bevorzugte Öle sind Sonnenblumenöl, Rapsöl, Walfischtran und Talgöl.

Die Einsatzmenge der Öle, bezogen auf die Gesamtemulsion, beträgt 20 bis 70, vorzugsweise 30 bis 60 Gew.-%. Mindestens 50 % des Öls der mit Wasser praktisch nicht mischbaren organischen Phase der Wasser-in-Öl-Polymeremulsion bestehen aus pflanzlichen und/oder tierischen Ölen. Die Ölphase der Wasser-in-Öl-Polymeremulsionen besteht besondes bevorzugt zu 100 % aus diesen Ölen. Die natürlichen Öle können jedoch mit allen beliebigen bisher für die Herstellung von Wasser-in-Öl-Polymeremulsion verwendeten mit Wasser praktisch nicht mischbaren Flüssigkeiten eingesetzt werden. Als Mischungskomponenten für die in der Natur vorkommenden Öle kommen hauptsächlich solche mit Wasser praktisch nicht mischbaren Flüssigkeiten in Betracht, die biologisch abbaubar sind, z.B. die in der DE-B-35 24 950 genannten aliphatischen Dicarbonsäureester. Um die Viskosität der Wasser-in-Öl-Polymeremulsionen zu erniedrigen, kann es von Vorteil sein, wenn die Ölphase bis zu 15 Gew.-% eines üblicherweise verwendeten Kohlenwasserstoffs enthält, z.B. Hexan, Cyclohexan, Heptan, n-Octan oder Isooctan. Die Ölphase besteht jedoch vorzugsweise aus einem pflanzlichen oder tierischen Öl bzw. einer Mischung solcher Öle.

Die Wasser-in-Öl-Polymeremulsionen enthalten feinverteilte wasserlösliche oder wasserquellbare Polymerisate. Die Polymerisate werden dadurch hergestellt, daß man wasserlösliche monoethylenisch ungesättigte Monomere allein oder zusammen mit Vernetzern in der wäßrigen Phase einer Wasser-in-Öl-Emulsion in Gegenwart von Emulgatoren und gegebenenfalls Netzmitteln und üblichen Polymerisationsinitiatoren polymerisiert. Die wasserlöslichen monoethylenisch ungesättigten Monomeren können gegebenenfalls zusammen mit wasserunlöslichen monoethylenisch ungesättigten Monomeren wie z.B. Vinylacetat copolymerisiert werden, wobei die wasserunlöslichen Monomeren in aller Regel nur in einer solchen Menge eingesetzt werden, daß noch wasserlösliche Polymerisate entstehen. Sofern man die wasserlöslichen monoethylenisch ungesättigten Monomeren zusammen mit Vernetzern copolymerisiert, kann man gegebenenfalls zusätzlich noch wasserunlösliche monoethylenisch ungesättigte Monomere einsetzen. Solche Polymerisate und die Herstellung von Polymerisaten nach dem Verfahren der Wasser-in-Öl-Polymerisation sind bekannt.

Zur näheren Erläuterung seien im folgenden lediglich beispielhaft wasserlösliche monoethylenisch ungesättigte Verbindungen genannt, und zwar monoethylenisch ungesättigte Carbonsäuren, wie Acrylsäure, Methacrylsäure, Maleinsäure, Itaconsäure, Salze der genannten Carbonsäuren, z.B. die Natrium-, Kalium- oder Ammoniumsalze, Acrylsäure- und Methacrylsäureester von Aminoalkoholen, wie beispielsweise Dimethylaminoethylacrylat in protonierter oder quaternisierter Form, z.B. Dimethylaminoethylacrylat-Hydrochlorid, Dimethylaminoethylacrylat-Hydrosulfat, Dimethylaminoethylacrylat-Methochlorid, Dimethylaminoethylacrylat-Methosulfat, Dimethylaminoethylmethacrylat-Hydrochlorid, Dimethylaminoethylmethacrylat-Hydrosulfat, Dimethylaminoethylmethacrylat-Methochlorid, Dimethylaminoethylmethacrylat-Methosulfat, Acrylamid, Methacrylamid, N-alkylierte (Meth)acrylamide, Methacrylamidopropyltrimethylammoniumchlorid, Acrylamidopropyltrimethylammoniumchlorid, Methacrylamidopropyltrimethylammoniummethylsulfat, Acrylamidopropyltrimethylammoniummethylsulfat, Acrylamido- und Methacrylamidoalkylsulfonsäuren und ihre Salze, wie 2-Acrylamido-2-methylpropansulfonsäure, Hydroxyalkylacrylate und Hydroxyalkylmethacrylate, Vinylsulfonsäure, Vinylphosphonsäure, N-Vinylamide, wie beispielsweise N-Vinylformamid, N-Vinylacetamid, N-Vinyl-N-methylacetamid und N-Vinyl-N-methylformamid, Diallyldimethylammoniumchlorid, N-Vinylpyrrolidon, N-Vinylimidazol, N-Vinylimidazolin, 2-Methyl-1-vinylimidazolin, 2-Sulfoethylmethacrylat, Styrolphosphonsäure und Styrolsulfonsäure. Geeignete wasserlösliche Monomere sind außerdem N-Methylolacrylamid, N-Methylolmethacrylamid sowie die mit einwertigen $C_1$- bis $C_4$-Alkoholen partiell oder vollständig veretherten N-Methylol(meth)acrylamide. Die wasserlöslichen Monomeren können entweder allein oder in Mischung untereinander zu wasserlöslichen Polymerisaten polymerisiert werden. Sie sind in jedem beliebigen Verhältnis miteinander copolymerisierbar.

Wasserquellbare Polymerisate sind dadurch erhältlich, daß man wasserlösliche monoethylenisch ungesättigte Monomere zusammen mit Vernetzern polymerisiert. Die Mengen von Vernetzer, die hierbei eingesetzt werden, sind von der Art des Vernetzers abhängig und liegen in dem Bereich von 10 ppm bis zu 10 Gew.-%, bezogen auf die eingesetzten Monomeren. Vorzugsweise betragen die Mengen an Vernetzer 0,001 bis 1 Gew.-%. Die Vernetzer enthalten mindestens zwei nicht konjugierte, ethylenisch ungesättigte Doppelbindungen. Geeignete Vernetzer sind beispielsweise N,N'-Methylenbisacrylamid, Polyethylenglykoldiacrylate und Polyethylenglykoldimethacrylate, die sich jeweils von Polyethylenglykolen eines Molekulargewichts von 126 bis 8500 ableiten, Trimethylolpropantriacrylat, Trimethylolpropantrimethacrylat, Ethylenglykoldiacrylat, Propylenglykoldiacrylat, Butandioldiacrylat, Hexandioldiacrylat, Hexandioldimethacrylat, Diacrylate und Dimethacrylate von Blockcopolymerisaaten aus Ethylenoxid und Propylenoxid, zweifach bzw. dreifach mit Acrylsäure oder Methacrylsäure veresterte Anlagerungsprodukte von Ethylenoxid und/oder Propylenoxid an Trimethylolpropan, mindestens zweifach mit Acrylsäure oder Methacrylsäure veresterte mehrwertige Alkohole, wie Glycerin oder Pentaerythrit, Triallylamin, Tetraallylethylendiamin, Divinylbenzol, Diallylphthalat, Polyethylenglykoldiallylether, Trimethylolpropandiallylether, Polyethylenglykoldivinylether, Butandioldivinylether, Pentaerythrittriallylether und/oder Divinylethylenharnstoff und/oder Triallylmonoalkylammoniumsalze, wie z.B. Triallylmethylammoniumchlorid. Vorzugsweise setzt man wasserlösliche Vernetzer ein, z.B. N,N'-Methylen-bisacrylamid, Polyethylenglykoldiacrylate, Polyethylenglykoldimethacrylate, Pentaerythrittriallylether und/oder Divinylharnstoff.

Die Wasser-in-Öl-Polymeremulsionen enthalten als wesentlichen Bestandteil alkoxylierte Umsetzungsprodukte von Glycidylethern mit mehrwertigen Alkoholen als Wasser-in-Öl-Emulgator. Solche Emulgatoren sind beispielsweise herstellbar durch Umsetzung von

(A) $C_{10}$- bis $C_{22}$-Fettalkoholen mit Epichlorhydrin im Molverhältnis 1:0,5 bis 1:1,5 zu Glycidylethern,

(B) Reaktion der Glycidylether mit (1) gesättigten, 2 bis 6 OH-Gruppen enthaltenden $C_2$- bis $C_6$-Alkoholen oder (2) der Monoether mit $C_{10}$- bis $C_{22}$-Fettalkoholen, im Molverhältnis Glycidylether zu (1) oder (2) von 1:0,5 bis 1:6 in Gegenwart von Säuren oder Basen und

(C) Alkoxilierung der Reaktionsprodrnkte gemäß (B) mit mindestens einem $C_2$- bis $C_4$-Alkylenoxid im Molverhältnis 1:1 bis 1:6.

Emulgatoren dieser Art sind beispielsweise aus der oben angegebenen GB-B-1 562 417 bekannt. Zur Herstellung dieser Emulgatoren setzt man in der Verfahrensstufe (A) einen $C_{10}$- bis $C_{22}$-Fettalkohol mit Epichlorhydrin in dem angegebenen Molverhältnis zu Glycidylethern um. Geeignete Fettalkohole sind beispielsweise Oleylalkohol, Stearylalkohol, Cetylalkohol, Myristylalkohol, Laurylalkohol, Talgfettalkohol und die nach dem Oxoverfahren erhältlichen langkettigen Alkohole mit 10 bis 22 Kohlenstoffatomen.

In der Verfahrensstufe (B) werden die gemäß (A) erhaltenen Glycidylether mit gesättigten, 2 bis 6 OH-Gruppen enthaltenen $C_2$- bis $C_6$-Alkoholen umgesetzt. Geeignete mehrwertige Alkohole dieser Art sind beispielsweise Ethylenglykol, Diethylenglykol, Dipropylenglykol, Butandiol-1,4, Butan-1,2,4-triol, Glycerin, Trimethylolpropan, Sorbit, Neopentylglykol und Pentaerythrit. Die genannten mehrwertigen Alkohole können auch eine Ethergruppierung aufweisen, die sich von $C_{10}$- bis $C_{22}$-Fettalkoholen ableitet. Geeignete Fettalkohole dieser Art wurden oben unter (A) bereits erwähnt. Geeignete Monoether von gesättigten 2 bis 6 OH-Gruppen enthaltenen $C_2$- bis $C_6$-Alkoholen sind beispielsweise 1-Oleyloxipropan-2,3-diol und Stearyloxipropan-2,3-diol. Die Glycidylether werden mit den beiden unter (B) angegebenen Verbindungsklassen entweder allein oder in Mischung im Verhältnis Glycidylether zu mehrwertigen Alkoholen oder Monoether von mehrwertigen Alkoholen von 1:0,5 bis 1:6 in Gegenwart von Säuren oder Basen zur Reaktion gebracht. Die so erhaltenen Umsetzungsprodukte werden dann in der Reaktionsstufe (C) alkoxyliert. Als Alkylenoxide kommen hierfür Ethylenoxid, Propylenoxid und Butylenoxide in Betracht. Vorzugsweise verwendet man Ethylenoxid. Die Anwendung von Mischungen aus Ethylenoxid und Propylenoxid, Ethylenoxid und Butylenoxid oder Ethylenoxid, Propylenoxid und Butylenoxid für die Alkoxylierung der Reaktionsprodukte (B) ist möglich.

Bezogen auf 1 Mol der Verbindung gemäß (B) verwendet man 1 bis 6 Mol an Alkylenoxiden. Die Einsatzmenge der oben beschriebenen Wasser-in-Öl-Emulgatoren beträgt 1 bis 40, vorzugsweise 10 bis 25 Gew.-%, bezogen auf die Gesamtemulsion.

Geeignete Wasser-in-Öl-Emulgatoren II mit HLB-Werten von 2 bis 10, vorzugsweise 3 bis 7, sind beispielsweise Mono-, Di- und Polyglycerin-Fettsäureester, wie Monooleat, Dioleat, Monostearat, Distearat und Palmitat-Stearat. Diese Ester sind beispielsweise dadurch erhältlich, daß man Mono-, Di- und Polyglycerine oder Mischungen der genannten mehrwertigen Alkohole mit langkettigen Fettsäuren verestert, z.B. mit Ölsäure, Stearinsäure oder Palmitinsäure. Außerdem eignen sich als Wasser-in-Öl-Emulgatoren II Sorbitan-Fettsäureester, wie Sorbitanmonooleat, Sorbitandioleat, Sorbitantrioleat, Sorbitanmonostearat und Sorbitantristearat. Andere geeignete Wasser-in-Öl-Emulgatoren II sind Mannit-Fettsäureester, wie Mannit-Monolaurat oder Mannit-Monopalmitat, Pentaerythrit-Fettsäureester, wie Pentaerythrit-Monomyristat, Pentaerythrit-Monopalmitat, Pentaerythritdipalmitat, Polyethylenglykol-Sorbitan-Fettsäureester, insbesondere die Monooleate, Polyethylenglykol-Mannit-Fettsäureester, insbesondere Monooleate und Trioleate, Glucose-Fettsäureester, wie Glucose-Monooleat und Glucose-Monostearat, Trimethylolpropandistearat, Reaktionsprodukte von Isopropylamid mit Ölsäure, Glycerin-Sorbitanfettsäureester, ethoxylierte Alkylamine, Hexadecyl-Natriumphthalat und Decylnatriumphthalat. Weitere geeignete Wasser-in-Öl-Emulgatoren II sind handelsübliche polymere Emulgatoren wie beispielsweise die Produkte der ICI EL 1429 D 477 und E 475.

Die Wasser-in-Öl-Polymeremulsionen können ferner gegebenenfalls bis zu 10 Gew.-%, bezogen auf die gesamte Emulsion, eines Netzmittels mit einem HLB-Wert von mehr als 10 enthalten (zur Definition des HLB-Wertes vgl. W.C. Griffin, Journal of Society of Cosmetic Chemist, Band 1, 311 (1950). Geeignete Netzmittel mit einem HLB-Wert über 10 sind beispielsweise ethoxylierte Alkylphenole, Dialkylester von Natriumsulfosuccinaten, bei der die Alkylgruppe mindestens 3 Kohlenstoffatome hat, Seifen, die sich von Fettsäuren mit 10 bis 22 Kohlenstoffatomen ableiten, Alkalisalze von Alkyl- oder Alkenylsulfaten mit 10 bis 26 Kohlenstoffatomen. Außerdem eignen sich ethoxylierte Fettalkohole und ethoxylierte Amine. Wenn man die Netzmittel bereits bei der Polymerisation einsetzt, erhält man gegebenenfalls besonders feinteilige Wasser-in-Öl-Polymeremulsionen.

Die Polymerisation der Monomeren wird in Gegenwart der üblichen Polymerisationsinitiatoren durchgeführt. Zum Einsatz kommen können wasserlösliche Verbindungen wie Kaliumperoxodisulfat, 2,2'-Azobis(2-amidinopropan)dihydrochlorid, 4,4'-Azobis(4-cyanopentansäure) oder Redoxsysteme wie z.B. Ammoniumpersulfat/Ferrosulfat. Bevorzugt verwendet man öllösliche Initiatoren wie z.B. Peroxide (Dibenzoylperoxid, Dilaurylperoxid, tert.-Butylperpivalat) oder Azoverbindungen (Azobis(isobutyronitril), Dimethyl-2,2'-Azobis-(isobutyrat), 2,2'-Azobis(4-methoxi-2,4-dimethylvaleronitril)).

Die Polymerisationstemperatur hängt von der Zerfallskinetik des verwendeten Initiators ab und kann im Bereich von 5 bis 100°C liegen. Zur Absenkung des Gehaltes an Restmonomeren ist es auch möglich, zunächst mit einem Starter zu beginnen und die Polymerisation dann mit einem zweiten Initiator gegebenenfalls bei höherer Temperatur zu beenden. Die Einsatzmengen der Initiatoren betragen in der Regel 0,01 bis 1, vorzugsweise 0,02 bis 0,5 Gew.-%, bezogen auf die Monomeren.

Die erfindungsgemäßen Wasser-in-Öl-Polymeremulsionen sind in der Regel selbstinvertierend, d.h. beim Eingießen der Emulsionen in Wasser tritt eine Phasenumkehr ein und das in der Emulsion vorhandene Polymerisat löst sich in Wasser. Die Phaseninversion kann jedoch durch Zusatz von Netzmitteln beschleunigt werden. Die Netzmittel können zur Emulsion oder zu dem Wasser zugegeben werden, in das die Emulsion eingetragen wird. Als Netzmittel für das Invertieren der Wasser-in-Öl-Emulsionen verwendet man vorzugsweise ethoxyliertes Nonylphenol mit einem Ethoxylierungsgrad von 5 bis 20 oder ethoxylierte und/oder propoxylierte Fettalkohole mit 10 bis 22 Kohlenstoffatomen und einem Alkoxylierungsgrad von 5 bis 20. Die oben beschriebenen Wasser-in-Öl-Polymeremulsionen weisen nur relativ geringe Gehalte an Koagulat auf, sind leicht filtrierbar und gut verarbeitbar. Die Polymerisate haben K-Werte nach Fikentscher von mindestens 100, vorzugsweise von 140 bis 300. Die nach dem erfindungsgemäßen Verfahren hergestellten Wasser-in-Öl-Polymeremulsionen können für die unterschiedlichsten Anwendungszwecke eingesetzt werden, beispielsweise als Retentions- und Entwässerungsmittel bei der Herstellung von Papier, Pappe und Karton, als Flockungs- und Entwässerungsmittel für Klärschlamm, als Flockungsmittel in der Trinkwasseraufbereitung, als Verflüssiger bei der Aufschlämmung von Bohrgesteinen z.B. bei der Erdölförderung, als Verdicker im Textildruck sowie als Zementadditiv.

Die in den Beispielen angegebenen Teile sind Gewichtsteile, die Angaben in Prozent beziehen sich, falls nicht anders angegeben, auf das Gewicht der Stoffe. Der K-Wert der Polymerisate wurde nach H. Fikentscher, Cellulosechemie, Band 13, 58-64 und 71-74 (1932) in 5 gew.-%iger Kochsalzlösung bei 25°C und einer Polymerkonzentration von 0,1 Gew.-% und pH 7 bestimmt.

Die Viskosität der Wasser-in-Öl-Polymeremulsionen wurde in einem Rotationsviskosimeter (Rotovisco RV 20 der Firma Haake, Meßsystem MVDIN) bei einer Temperatur von 25°C und einem Schergefälle von 100 s$^{-1}$ gemessen.

Folgende Emulgatoren wurden verwendet:

Emulgator A ( = Wasser-in-Öl-Emulgator I) wurde hergestellt durch Umsetzung von (A) Oleylalkohol mit Epichlorhydrin im Molverhältnis 1:1 zu Oleylglycidylether, cB) Reaktion des Oleylglycidylethers mit Glycerin im Molverhältnis 1:1 in Gegenwart von $BF_3$-Phosphorsäure bei einer Temperatur von 80°C und Entfernen des Katalysators mit Hilfe eines basischen Ionenaustauschers und (C) Ethoxylierung des Reaktionsproduktes gemäß (B) mit 2 Mol Ethylenoxid.

Emulgator B: handelsübliches Sorbitanmonooleat.

Emulgator C: handelsübliches Sorbitanmonostearat.

Wasser-in-Öl-Emulgatoren II

Emlgator II wurde herstellt gemäß EP-A 451 461 durch Veresterung von Polyglycerin mit 2 mol Ölsäure.

Emulgator II/2: Umsetzungsprodukt von Polyglycerin mit 2 mol Stearinsäure.

Emulgator II/3: handelsübliches Sorbitanmonooleat.

Emulgator II/4: ICI-Polymeremulgator EL 1429.

Allgemeine Herstellvorschrift für die Wasser-in-Öl-Polymeremulsionen Eine Monomeremulsion, die durch Vermischen der wäßrigen Monomerphase und der Ölphase unter Rühren hergestellt wird und die durch Spülen mit Stickstoff von gelöstem Sauerstoff weitgehend befreit ist, wird auf die in den Beispielen jeweils angegebenen Reaktionstemperatur aufgeheizt. Anschließend gibt man den Initiator zu. Während der Polymerisation wird die Badtemperatur so geregelt, daß die Temperatur der Emulsion konstant bleibt. Nach Beendigung der Polymerisation wird die Wasser-in-Öl-Polymeremulsion durch ein Perlonfilter mit der in den Beispielen jeweils angegebenen Maschenweite filtriert. Das abfiltrierte Koagulat wird mit Cyclohexan gewaschen, dann getrocknet und gewogen.

Ca. 2 g des Polymerisates der Wasser-in-Öl-Polymeremulsionen werden durch Ausfällen mit Gemischen aus Methanol und Aceton im Gewichtsverhältnis 1:1 isoliert und im Vakuumtrockenschrank bei 70°C bis zur Gewichtskonstanz getrocknet.

Beispiel 1

In einen 2 l fassenden Kolben, der mit einem Rührer, Thermometer und Gaseinleitungsrohr versehen ist, gibt man nacheinander

250 g Rüböl (Vollraffinat),

110 g Emulgator A,

160 g 50 %ige wäßrige Acrylamidlösung und

0,1 g 40 %ige wäßrige Diethylentriaminpentaessigsäure-Natriumsalz-Lösung

und rührt das Gemisch bei einer Drehzahl von 200 UpM unter Einleitung von Stickstoff 30 min. bei einer Temperatur von 25°C. Anschließend fügt man 0,1 g Dimethyl 2,2'-Azobis-(isobutyrat) in 1 g Aceton gelöst hinzu und erhitzt das Reaktionsgemisch auf 55°C. Während der Polymerisation wird die Badtemperatur so geregelt, daß die Temperatur der Reaktionsmischung konstant bleibt. Nach etwa 4 Stunden ist die Polymerisation beendet. Die Emulsion wird dann durch ein Perlonfilter mit einer Maschenweite von 250 $\mu$m filtriert. Das Polymerisat hatte einen K-Wert von 178, die Viskosität der Wasser-in-Öl-Polymeremulsion betrug 260 mPas. 0,9 % Koagulat wurden abfiltriert.

Gibt man unter schnellem Rühren mit einem Magnetrührer 2 g der Wasser-in-Öl-Polymeremulsion in 98 g destilliertes Wasser, so erhält man nach ca. 15 min. eine nahezu homogene, milchig viskose Lösung. Dieser Invertiervorgang und Auflösen des Polyacrylamids in Wasser läßt sich beschleunigen, wenn man in 100 g Emulsion 0,6 g eines Umsetzungsproduktes von Myristylalkohol mit 7 mol Ethylenoxid und 4 mol Propylenoxid als Netzmittel einrührt. Man erhält dann schon nach etwa 8 Minuten eine nahezu homogene, milchig viskose Lösung.

Beispiel 2

Das Beispiel 1 wurde mit den Ausnahmen wiederholt, daß man 300 g einer 50 %igen wäßrigen Acrylamidlösung, 220 g Rüböl (Vollraffinat) und 80 g Emulgator A einsetzte. Die dabei erhaltene Wasser-in-Öl-Polymeremulsion hatte eine Viskosität von 3500 mPas. Der K-Wert des Polymerisates betrug 208. 0,09 % Koagulat wurden abfiltriert.

Beispiel 3

Beispiel 1 wurde mit den Ausnahmen wiederholt, daß man 240 g einer 50 %igen wäßrigen Acrylamidlösung, 275 g Sonnenblumenöl (Vollraffinat) und 80 g Emulgator A anstelle der im Beispiel 1 angegebenen Mengen bzw. Stoffe einsetzte. Die Viskosität der Wasser-in-Öl-Polymeremulsion betrug 1130 mPas. Das Polymerisat hatte einen K-Wert von 195. 0,85 % Koagulat wurden abfiltriert.

Vergleichsbeispiel 1

Das Beispiel 1 wurde mit den Ausnahmen wiederholt, daß 250 g einer 50 %igen wäßrigen Acrylamidlösung, 250 g Rüböl (Vollraffinat) und 80 g Emulgator B eingesetzt wurden. Hierbei entstand eine stippige, nicht filtrierbare Wasser-in-Öl-Polymeremulsion.

Beispiel 4

In einem 2 l fassenden Kolben, der mit einem Rührer, Thermometer und Gaseinleitungsrohr versehen ist, legt man als Ölphase
130 g Rüböl (Vollraffinat) und
60 g Emulgator A
vor. Dann gibt man als wäßrige Phase eine Mischung aus
140 g 50 %iger wäßriger Acrylamidlösung,
48 g 80 %iger Dimethylaminoethylacrylat-Methochloridlösung und
0,1 g 40 %iger wäßriger Diethylentriaminpentaessigsäure-Natriumsalz-Lösung
(durch Zugabe weniger Tropfen 10 %iger Salzsäure stellt man einen pH-Wert von 4,0 ein) hinzu und rührt bei einer Drehzahl von 200 UpM unter Einleiten von Stickstoff 30 Minuten bei 25°C. Anschließend fügt man als Initiator 0,1 g Dimethyl 2,2'-Azobis(isobutyrat) in 1 g Aceton hinzu und erhitzt das Reaktionsgemisch auf 55°C. Während der Polymerisation wird die Badtemperatur so geregelt, daß die Temperatur der Reaktionsmischung konstant bleibt. Die Polymerisation ist nach ca. 4 h beendet. Die Emulsion wird dann durch einen Perlonfilter mit einer Maschenweite von 250 μm filtriert. Der Koagulatanteil, bezogen auf die Gesamtemulsion, beträgt 0,09 %. Die Wasser-in-Öl-Polymeremulsion hat eine Viskosität von 700 mPas. Der K-Wert des Polymerisates beträgt 197.
Gibt man unter schnellem Rühren mit einem Magnetrührer zu 98 g destilliertem Wasser 2 g der oben beschriebenen Wasser-in-Öl-Polymeremulsion, so erhält man nach ca. 17 min. eine nahezu homogene, milchige viskose Lösung.
Dieser Invertiervorgang und das Auflösen des Copolymerisates läßt sich beschleunigen, wenn man in 100 g Emulsion 0,4 g eines Umsetzungsproduktes von Myristylalkohol mit 7 mol Ethylenoxid und 4 mol Propylenoxid einrührt und mit dieser netzmittelhaltigen Wasser-in-Öl-Polymeremulsion wie oben verfährt. Man erhält dann bereits nach ca. 8 Minuten eine nahezu homogene, milchige viskose Lösung.

Beispiele 5 bis 14

Das Beispiel 4 wird jeweils mit den aus Tabelle 1 ersichtlichen Änderungen wiederholt. Die dabei erhaltenen Ergebnisse sind ebenfalls in Tabelle 1 angegeben.

Tabelle 1

| Bei-spiel | M$_1$ [g] | M$_2$ [g] | Öl [g] | Emulga-tor [g] | Ini-tia-tor | T [°C] | Koagu-lat [%] | K-Wert | Visko-sität [mPas] |
|---|---|---|---|---|---|---|---|---|---|
| | | | | Emulga-tor A | | | | | |
| 5 | 140 | 48 | 130[1] | 45 | a | 55 | 0,41 | 211 | 1290 |
| 6 | 140 | 48 | 130[1] | 30 | a | 55 | n.b. | 233 | 24000 |
| 7 | 140 | 48 | 130[1] | 45 | b | 30 | 0,01 | 232 | 1190 |
| 8 | 140 | 48 | 130[2] | 45 | a | 55 | 0,23 | 204 | 1250 |
| 9 | 140 | 48 | 130[3] | 45 | a | 55 | 0,5 | 199 | 1145 |
| 10 | 140 | 48 | 130[4] | 45 | a | 55 | 0,4 | 208 | 930 |
| 11 | 140 | 48 | 180[1] | 60 | a | 55 | 0,11 | 205 | 640 |
| 12 | 100 | 88 | 150[1] | 60 | a | 55 | 0,08 | 177 | 860 |
| 13 | 120 | 68 | 150[1] | 60 | a | 55 | 0,08 | 192 | 690 |
| 14 | 160 | 28 | 150[1] | 60 | a | 55 | 0,22 | 206 | 920 |
| Vergleichs-beispiel | | | | Emulga-tor B | | | | | |
| 2 | | | 130[1] | 45 | a | 55 | [5] | n.b. | n.b. |
| 3 | | | 130[1] | 60 | a | 55 | [5] | n.b. | n.b. |
| 4 | | | 130[1] | 80 | a | 55 | 1,5 | 173 | n.b. |
| 5 | | | 180[1] | 60 | a | 55 | [5] | n.b. | n.b. |
| | | | | Emulga-tor C | | | | | |
| 6 | | | 130[1] | 80 | a | 55 | [5] | n.b. | n.b. |

M$_1$: 50 %ige wäßrige Acrylamid-Lösung

M$_2$: 80 %ige wäßrige Dimethylaminoethylacrylat-Methochlorid-Lösung

T: Polymerisationstemperatur

a: Dimethyl 2,2'-Azobis(isobutyrat)

b: 2,2'-Azobis(4-methoxi-2,4-dimethylvaleronitril)

[1]: Rüböl (Vollraffinat)

[2]: Sonnenblumenöl (Vollraffinat)

[3]: Olivenöl (Vollraffinat)

[4]: Safloröl (Vollraffinat)

[5]: nicht filtrierbar (stippig)

n.b.: nicht bestimmbar

Beispiel 15

In einem 2 l fassenden Kolben, der mit einem Rührer, Thermometer und Gaseinleitungsrohr versehen ist, legt man als Ölphase

190 g Rüböl und

60 g Emulgator A

vor. Zur Herstellung der wäßrigen Phase mischt man

125 g 50 %ige wäßrige Acrylamidlösung,
27 g Acrylsäure,
0,02 g Ameisensäure als Regler und
0,1 g 40 %ige wäßrige Lösung von Diethylentriaminpentaessigsäure-Natriumsalz

und fügt vorsichtig 59 g 25 %ige wäßrige Natronlauge zu. Der pH-Wert der wäßrigen Phase beträgt dann 7,0. Die wäßrige Phase wird danach zur Ölphase gegeben und die Mischung bei einer Drehzahl von 200 UpM gerührt, wobei man 30 min. lang Stickstoff bei einer Temperatur der Mischung von 25°C hindurchleitet. Anschließend fügt man als Initiator 0,1 g Dimethyl-2,2'-azo-bis(isobutyrat) in 1 g Aceton gelöst hinzu und erhitzt das Reaktionsgemisch auf 55°C. Die Polymerisation dauert etwa 4 h. Danach wird die erhaltene Wasser-in-Öl-Polymeremulsion durch ein Perlonfilter mit einer Maschenweite von 250 μm filtriert. Der Koagulatanteil beträgt, bezogen auf die gesamte Emulsion, 0,25 %. Das Copolymerisat hat einen K-Wert von 226. Die Viskosität der Wasser-in-Öl-Polymeremulsion beträgt 600 mPas.

Gibt man unter schnellem Rühren mit einem Magnetrührer zu 98 g destilliertem Wasser 2 g der oben beschriebenen Emulsion hinzu, so erhält man nach ca. 20 min. eine nahezu homogene, milchige viskose Lösung. Das Auflösen des Polymerisats in Wasser läßt sich jedoch beschleunigen, wenn man zu 100 g der oben beschriebenen Wasser-in-Öl-Polymeremulsion 0,4 g eines Umsetzungsproduktes von 1 mol Myristylalkohol mit 7 mol Ethylenoxid und 4 mol Propylenoxid einrührt. Man erhält dann bereits nach etwa 10 Minuten eine nahezu homogene, milchige viskose Lösung.

Beispiele 16 bis 20

Das Beispiel 15 wird mit den in Tabelle 2 angegebenen Ausnahmen wiederholt. Die dabei erhaltenen Resulte sind ebenfalls in Tabelle 2 angegeben.

Tabelle 2

| Bei-spiel | M$_1$ [g] | M$_2$ [g] | NaOH [g] | Öl [g] | Emulga-tor [g] | Ini-tia-tor | T [°C] | Koagu-lat [%] | K-Wert | Visko-sität [mPas] |
|---|---|---|---|---|---|---|---|---|---|---|
| | | | | | Emulga-tor A | | | | | |
| | | | mit | 200 ppm | Ameisensäure | als | Regler | | | |
| 16 | 125 | 27 | 59 | 190[1] | 60 | b | 30 | 0,01 | 267 | 2100 |
| | | | ohne | Regler | | | | | | |
| 17 | 125 | 27 | 59 | 190[1] | 60 | a | 55 | 0,10 | 238 | 790 |
| 18 | 125 | 27 | 59 | 190[2] | 60 | a | 55 | 0,05 | 245 | 900 |
| 19 | 125 | 27 | 59 | 170[2] | 60 | a | 55 | 0,05 | 245 | 900 |
| 20 | 90 | 34 | 76 | 190[1] | 60 | a | 55 | 0,04 | 247 | 720 |
| Vergleichs-beispiel | | | | | Emulga-tor B | | | | | |
| 7 | 125 | 27 | 59 | 190[1] | 60 | a | 55 | [3] | n.b. | n.b. |
| 8 | 125 | 27 | 59 | 190[1] | 80 | a | 55 | 10,3 | n.b. | n.b. |
| | | | | | Emulga-tor C | | | | | |
| 9 | 125 | 27 | 59 | 190[1] | 80 | a | 55 | [3] | n.b. | n.b. |

M$_1$: 50 %ige wäßrige Acrylamid-Lösung
M$_2$: 80 %ige wäßrige Dimethylaminoethylacrylat-Methochlorid-Lösung
T: Polymerisationstemperatur
a: Dimethyl 2,2'-Azobis(isobutyrat)
b: 2,2'-Azobis(4-methoxi-2,4-dimethylvaleronitril)

[1]: Rüböl (Vollraffinat)
[2]: Sonnenblumenöl (Vollraffinat)
[3]: nicht filtrierbar (stippig)
n.b.: nicht bestimmbar

Beispiel 21

Das Beispiel 1 wurde mit den Ausnahmen wiederholt, daß man 360 g einer 50 %igen wäßrigen 3-Methacrylamidopropyltrimethylammoniumchloridlösung, 260 g Rüböl (Vollraffinat) und 90 g Emulgator A einsetzte. Die dabei erhaltene Wasser-in-Öl-Polymeremulsion hatte eine Viskosität von 730 paß. Der K-Wert des Polymerisates betrug 148. 0,01 % Koagulat wurden abfiltriert.

Beispiel 22

Das Beispiel 15 wurde mit den Ausnahmen wiederholt, daß man 188 g 50 %ige wäßrige Acrylamidlösung, 115 g 2-Acrylamido-2-methylpropansulfonsäure, 0,2 g 40 %ige wäßrige Diethylentriaminpentaessigsäure-Natriumsalz-Lösung, 85 g 25 %ige wäßrige Natronlauge, 255 g Rüböl (Vollraffinat) und 90 g Emulgator A einsetzte. Die dabei erhaltene Wasser-in-Öl-Polymeremulsion hatte eine Viskosität von 2700 mPas. Die K-Wert des Polymerisates betrug 143. 0,14 % Koagulat wurden abfiltriert.

Beispiel 23

In einem 2 l fassenden Kolben, der mit einem Rührer, Thermometer und Gaseinleitungsrohr versehen ist, legt man als Ölphase
260 g Rüböl
45 g Emulgator A und
10 g Emulgator II/1
vor. Dann gibt man als wäßrige Phase eine Mischung aus
280 g 50 %iger wäßriger Acrylamidlösung,
96 g 80 %iger wäßriger Dimethylaminoethylacrylat-Methochlorid-Lösung und
0,2 g 40 %iger wäßriger Diethylentriaminpentaessigsäure-Natriumsalz,
(durch Zugabe weniger Tropfen 10 %iger Salzsäure stellt man einen pH-Wert von 4 ein) hinzu und rührt bei einer Drehzahl von 200 Upm unter Einleitung von Stickstoff 30 min bei 25 °C. Anschließend fügt man als Initiator 0,1 g Dimethyl-2,2'-Azobis(isobutyrat) in 1 g Aceton hinzu und erhitzt das Reaktionsgemisch auf 55 °C. Während der Polymerisation wird die Badtemperatur so geregelt, daß die Temperatur der Reaktionsmischung konstant bleibt. Die Polymerisation ist nach ca. 4 h beendet. Die Emulsion wird dann durch ein Perlonfilter (Maschenweite 250 mm) filtriert. Der Koagulatanteil (bezogen auf die Gesamtemulsion) beträgt 0,59 %. Die Wasser-in-Öl-Polymeremulsion hat eine Viskosität von 1850 mPas. Der K-Wert des Polymerisates beträgt 194.

Gibt man unter schnellem Rühren mit dem Magnetrührer 2 g Emulsion in 98 g destilliertes Wasser, er erhält man nach ca. 15 min eine nahezu homogene, milchige viskose Lösung.

Dieser Invertiervorgang und das Auflösen des Copolymerisates läßt sich beschleunigen, wenn man in 100 g Emulsion 0,4 g eines Umsetzungsproduktes von Myristylalkohol mit 7 mol Ethylenoxid und 4 mol Propylenoxid einrührt und mit dieser netzmittelhaltigen wasser-in-Öl-Polymeremulsion wie oben verfährt. Man erhält dann bereits nach ca. 8 min eine nahezu homogene, milchige viskose Lösung.

Beispiele 24 bis 27

Das Beispiel 23 wird jeweils mit den aus Tabelle 3 ersichtlichen Änderungen wiederholt. Die dabei erhaltenen Ergebnisse sind ebenfalls in Tabelle 3 angegeben.

Tabelle 3

| Bei-spiel | Rüb-öl [g] | A [g] | II/1 [g] | II/2 [g] | II/3 [g] | Koagu-lat [%] | K-Wert | Viskosität [mPas] |
|---|---|---|---|---|---|---|---|---|
| 24 | 260 | 55 | 10 | – | – | 0,57 | 179 | 1770 |
| 25 | 295 | 45 | 10 | – | – | 0,25 | 186 | 1460 |
| 26 | 295 | 45 | – | 10 | – | 0,10 | 197 | 4800 |
| 27 | 295 | 45 | – | – | 10 | 0,16 | 217 | 1820 |
| Vergleichsbeispiel | | | | | | | | |
| 10 | 260 | 45 | – | – | – | n.b. | n.b. | n.b.[1] |
| 11 | 295 | 45 | – | – | – | n.b. | n.b. | n.b. |
| 12 | 260 | 55 | – | – | – | n.b. | n.b. | 29000 |

n.b.: nicht bestimmbar, Emulsion stippig

[1]: cremeartig

Beispiel 28

In einem 2 l fassenden Kolben, der mit einem Rührer, Thermometer und Gaseinleitungsrohr versehen ist, legt man als Ölphase

220 g Rüböl
30 g Emulgator A und
10 g Emulgator II/1

vor. Zur Herstellung der wäßrigen Phase mischt man

175 g 50 %ige wäßrige Acrylamidlösung,
27 g Acrylsäure und
0,1 g 40 %ige wäßrige Diethylentriaminpentaessigsäure-Natriumsalz

und fügt vorsichtig 59 g 25 %ige wäßrige Natronlauge hinzu. Der pH-Wert der wäßrigen Phase beträgt dann 7. Die wäßrige Phase wird dann zur Ölphase gegeben und bei einer Drehzahl von 200 Upm unter Einleitung von Stickstoff 30 min bei 25°C gerührt. Anschließend fügt man als Initiator 0,1 g Dimethyl-2,2'-azobis-(isobutyrat) in 1 g Aceton gelöst hinzu und erhitzt das Reaktionsgemisch auf 55°C. Die Polymerisation dauert ca. 4 h. Danach wird die Emulsion durch ein Perlonfilter (Maschenweite 250 mm) filtriert. Der Koagulatanteil beträgt, bezogen auf die gesamte Emulsion, 0,008 %. Die Wasser-in-Öl-Polymeremulsion hat eine Viskosität von 350 mPas. Der K-Wert des Polymerisates beträgt 205.

Gibt man unter schnellem Rühren mit dem Magnetrührer 2 g Emulsion in 98 g destilliertes Wasser, so erhält man nach ca. 15 min eine nahezu homogene, milchige viskose Lösung.

Dieser Invertiervorgang und das Auflösen des Copolymerisates läßt sich beschleunigen, wenn man in 100 g Emulsion 0,4 g eines Umsetzungsproduktes von Myristylalkohol mit 7 mol Ethylenoxid und 4 mol Propylenoxid einrührt und mit dieser netzmittelhaltigen Wasser-in-Öl-Polymeremulsion wie oben verfährt. Man erhält dann bereits nach ca. 8 min eine nahezu homogene, milchige viskose Lösung.

Beispiele 29 bis 31

Das Beispiel 28 wird jeweils mit den aus Tabelle 4 ersichtlichen Änderungen wiederholt. Die dabei erhaltenen Ergebnisse sind ebenfalls in Tabelle 4 angegeben.

Tabelle 4

| Bei- spiel | Rüb- öl [g] | A [g] | II/3 [g] | II/4 [g] | Koagu- lat [%] | K-Wert | Viskosität [mPas] |
|---|---|---|---|---|---|---|---|
| 29 | 220 | 30 | 10 | – | 0,026 | 249 | 670 |
| 30 | 150 | 30 | 10 | – | 0,02 | 265 | 2170 |
| 31 | 170 | 30 | – | 5 | 0,04 | 236 | 2300 |
| Vergleichsbeispiel | | | | | | | |
| 13 | 220 | 30 | – | – | n.b. | n.b. | n.b. |
| 14 | 170 | 30 | – | – | n.b. | n.b. | n.b. |

n.b.: nicht bestimmbar, Emulsion stippig

Beispiel 32

In einem 2 l fassenden Kolben, der mit einem Rührer, Thermometer und Gaseinleitungsrohr versehen ist, legt man als Ölphase
220 g Rüböl,
30 g Emulgator A und

10 g Emulgator II/1

vor. Zur Herstellung der wäßrigen Phase mischt man

10 g Wasser,

70 g Acrylsäure und

0,05 g 40 %ige wäßrige Diethylentriaminpentaessigsäure-Natriumsalz

und fügt vorsichtig 152 g 25 %ige wäßrige Natronlauge hinzu. Der pH-wert der wäßrigen Phase beträgt dann 7. Die wäßrige Phase wird dann zur olphase gegeben und bei einer Drehzahl von 200 upm unter Einleitung von Stickstoff 30 min bei 25oC gerührt. Anschließend fügt man als Initiator 0,1 g Dimethyl-2,2'-azobis(isobutyrat) in 1 g Aceton gelöst hinzu und erhitzt das Reaktionsgemisch auf 55°C. Die Polymerisation dauert ca. 4 h. Danach wird die Emulsion durch ein Perlonfilter (Maschenweite 250 µm) filtriert. Der Koagulatanteil beträgt, bezogen auf die gesamte Emulsion, 0,2 %. Die Wasser-in-Öl-Polymeremulsion hat eine Viskosität von 550 mPas. Der K-Wert des Polymerisates beträgt 156.

Beispiel 33

In einem 2 l fassenden Kolben, der mit einem Rührer, Thermometer und Gaseinleitungsrohr versehen ist, legt man als Ölphase

220 g Rüböl,

30 g Emulgator A und

10 g Emulgator II/1

vor. Zur Herstellung der wäßrigen Phase mischt man

20,2 g 50 %ige wäßrige Acrylamidlösung,

70 g Acrylsäure,

15 mg N,N'-Methylenbisacrylamid und

0,05 g 40 %ige wäßrige Diethylentriaminpentaessigsäure-Natriumsalz

und fügt vorsichtig 150 g 25 %ige wäßrige Natronlauge hinzu. Der pH-Wert der wäßrigen Phase beträgt dann 7. Die wäßrige Phase wird dann zur Ölphase gegeben und bei einer Drehzahl von 200 Upm unter Einleitung von Stickstoff 30 min bei 25°C gerührt. Anschließend fügt man als Initiator 0,1 g Dimethyl-2,2'-azobis(isobutyrat) in 1 g Aceton gelöst hinzu und erhitzt das Reaktionsgemisch auf 55°C. Die Polymerisation dauert ca. 4 h. Danach wird die Emulsion durch ein Perlonfilter (Maschenweite 250 µm) filtriert. Der Koagulatanteil beträgt, bezogen auf die gesamte Emulsion, 0,4 %. Die Wasser-in-Öl-Polymeremulsion hat eine Viskosität von 1440 mPas.

Beispiel 34

In einem 2 l fassenden Kolben, der mit einem Rührer, Thermometer und Gaseinleitungsrohr versehen ist, legt man als Ölphase

300 g Rüböl,

60 g Emulgator A und

20 g Emulgator II/3

vor. Zur Herstellung der wäßrigen Phase mischt man

380 g 50 %ige wäßrige Acrylamidlösung,

0,1 g 40 %ige wäßrige Diethylentriaminpentaessigsäure-Natriumsalz.

Die wäßrige Phase wird zur Ölphase gegeben und bei einer Drehzahl von 200 Upm unter Einleitung von Stickstoff 30 min bei 25°C gerührt. Anschließend fügt man als Initiator 0,1 g Dimethyl-2,2'-azobis-(isobutyrat) in 1 g Aceton gelöst hinzu und erhitzt das Reaktionsgemisch auf 55°C. Die Polymerisation dauert ca. 4 h. Danach wird die Emulsion durch ein Perlonfilter (Maschenweite 250 µm) filtriert. Der Koagulatanteil beträgt, bezogen auf die gesamte Emulsion, 0,33 %. Die Wasser-in-Öl-Polymeremulsion hat eine Viskosität von 2650 mPas. Der K-Wert des Polymerisats beträgt 226.

**Patentansprüche**

1. Wasser-in-Öl-Polymeremulsionen, die in einer kontinuierlichen mit Wasser praktisch nicht mischbaren organischen Phase fein verteilte wasserlösliche oder wasserquellbare Polymerisate, einen Wasser-in-Öl-Emulgator und gegebenenfalls Netzmittel enthalten, dadurch gekennzeichnet, daß die kontinuierliche organische Phase zu mindestens 50 Gew.-% aus einem Öl pflanzlicher oder tierischer Herkunft besteht und als Wasser-in-Öl-Emulgator Verbindungen enthält, die durch Umsetzung von

(A) $C_{10}$- bis $C_{22}$-Fettalkoholen mit Epichlorhydrin im Molverhältnis 1:0,5 bis 1:1,5 zu Glycidylethern,

(B) Reaktion der Glycidylether mit (1) gesättigten, 2 bis 6 OH-Gruppen enthaltenden $C_2$- bis $C_6$-Alkoholen oder (2) deren Monoether mit $C_{10}$- bis $C_{22}$-Fettalkoholen, im Molverhältnis Glycidylether zu (1) oder (2) von 1:0,5 bis 1:6 in Gegenwart von Säuren oder Basen und

(C) Alkoxilierung der Reaktionsprodukte gemäß (B) mit mindestens einem $C_2$- bis $C_4$-Alkylenoxid im Molverhältnis 1:1 bis 1:6

erhältlich sind, wobei gegebenenfalls 5 bis 95 Gew.-% der genannten Wasser-in-Öl-Emulgatoren durch andere Wasser-in-Öl-Emulgatoren ersetzt sind.

2. Wasser-in-Öl-Polymeremulsionen nach Anspruch 1, dadurch gekennzeichnet, daß die kontinuierliche organische Phase aus einem Öl pflanzlicher oder tierischer Herkunft besteht.

3. Verfahren zur Herstellung von Wasser-in-Öl-Polymeremulsionen nach Anspruch 1 oder 2, dadurch gekennzeichnet, daß man wasserlösliche monoethylenisch ungesättigte Monomere allein oder zusammen mit Vernetzern und/oder gegebenenfalls wasserunlöslichen monoethylenisch ungesättigten Monomeren mit Wasser-in-Öl-Emulgatoren, die durch Umsetzung von

(A) $C_{10}$- bis $C_{22}$-Fettalkoholen mit Epichlorhydrin im Molverhältnis 1:0,5 bis 1:1,5 zu Glycidylethern,

(B) Reaktion der Glycidylether mit (1) gesättigten, 2 bis 6 OH-Gruppen enthaltenden $C_2$- bis $C_6$-Alkoholen oder (2) deren Monoether mit $C_{10}$- bis $C_{22}$-Fettalkoholen, im Molverhältnis Glycidylether zu (1) oder (2) von 1:0,5 bis 1:6 in Gegenwart von Säuren oder Basen und

(C) Alkoxilierung der Reaktionsprodukte gemäß (B) mit mindestens einem $C_2$- bis $C_4$-Alkylenoxid im Molverhältnis 1:1 bis 1:6

erhältlich sind, wobei gegebenenfalls 5 bis 95 Gew.-% der genannten Wasser-in-Öl-Emulgatoren durch andere Wasser-in-Öl-Emulgatoren ersetzt sind, in einer organischen Phase emulgiert, die zu mindestens 50 Gew.% aus einem Öl pflanzlicher oder tierischer Herkunft besteht und die Monomeren der Emulsion in Gegenwart von Initiatoren und gegebenenfalls Netzmitteln polymerisiert.

## Claims

1. A water-in-oil polymer emulsion which contains a water-soluble or water-swellable polymer finely distributed in a continuous, virtually water-immiscible organic phase, a water-in-oil emulsifier and, if required, a wetting agent, wherein the continuous organic phase consists of not less than 50% by weight of an oil of vegetable or animal origin and contains, as a water-in-oil emulsifier, a compound which is obtainable by

(A) reacting a $C_{10}$-$C_{22}$-fatty alcohol with epichlorohydrin in a molar ratio of from 1 : 0.5 to 1 : 1.5 to give a glycidyl ether,

(B) reacting the glycidyl ether with (1) a saturated $C_2$-$C_6$-alcohol containing from 2 to 6 OH groups or (2) the monoether thereof with a $C_{10}$-$C_{22}$-fatty alcohol, in a molar ratio of glycidyl ether to (1) or (2) of from 1 : 0.5 to 1 : 6, in the presence of an acid or base and

(C) alkoxylating the reaction product from (B) with one or more $C_2$-$C_4$-alkylene oxides in a molar ratio of from 1 : 1 to 1 : 6,

if necessary, from 5 to 95% by weight of the stated water-in-oil emulsifier being replaced with other water-in-oil emulsifiers.

2. A water-in-oil polymer emulsion as claimed in claim 1, wherein the continuous organic phase consists of an oil of vegetable or animal origin.

3. A process for the preparation of a water-in-oil polymer emulsion as claimed in claim 1 or 2, wherein water-soluble monoethylenically unsaturated monomers, alone or together with crosslinking agents or, if required, water-insoluble monoethylenically unsaturated monomers, are emulsified with a water-in-oil emulsifier which is obtainable by

(A) reacting a $C_{10}$-$C_{22}$-fatty alcohol with epichlorohydrin in a molar ratio of from 1 : 0.5 to 1 : 1.5 to give a glycidyl ether,

(B) reacting the glycidyl ether with (1) a saturated $C_2$-$C_6$-alcohol containing from 2 to 6 OH groups or (2) the monoether thereof with a $C_{10}$-$C_{22}$-fatty alcohol, in a molar ratio of glycidyl ether to (1) or (2) of from 1 : 0.5 to 1 : 6, in the presence of an acid or base and

(C) alkoxylating the reaction product from (B) with one or more $C_2$-$C_4$-alkylene oxides in a molar ratio of from 1 : 1 to 1 : 6,

if necessary, from 5 to 95% by weight of the stated water-in-oil emulsifier being replaced with other water-in-oil emulsifiers, in an organic phase which consists of not less than 50% by weight of an oil of vegetable or animal origin, and the monomers of the emulsion are polymerized in the presence of initiators and, if required, wetting agents.

**Revendications**

1.  Emulsions de polymères eau-dans-huile, qui, dans une phase organique continue et pratiquement non miscible à l'eau, des polymères solubles dans l'eau ou gonflables à l'eau, finement divisés, un agent émulsif eau-dans-huile et éventuellement des agents mouillants, caractérisées en ce que la phase organique et continue contient au moins 50% en poids d'une huile d'origine végétale ou animale et contient, à titre d'agent émulsif eau-dans-huile, des composés que l'on peut obtenir par la conversion

    (A) d'alcools gras en $C_{10}$ à $C_{22}$ avec l'épichlorhydrine, dans le rapport molaire de 1:0,5 à 1:1,5, en éthers glycidyliques,

    (B) réaction des éthers glycidyliques avec (1) des alcools en $C_2$ à $C_6$, contenant de 2 à 6 radicaux OH, ou (2) leurs monoéthers avec des alcools gras en $C_{10}$ à $C_{22}$, dans le rapport molaire éther glycidylique à (1) ou à (2) de 1:0,5 à 1:6, en présence d'acides ou de bases et

    (C) alcoxylation des produits de la réaction selon (B) avec au moins un oxyde d'alkylène en $C_2$ à $C_4$ dans le rapport molaire de 1:1 à 1:6,

    où éventuellement 5 à 95% des émulsifs eau-dans-huile susmentionnés sont remplacés par d'autres émulsifs eau-dans-huile.

2.  Emulsions de polymères eau-dans-huile suivant la revendication 1, caractérisées en ce que la phase organique et continue se compose d'une huile d'origine végétale ou animale.

3.  Procédé de préparation d'émulsions de polymères eau-dans-huile suivant la revendication 1 ou 2, caractérisé en ce que l'on émulsionne des monomères monoéthyléniquement insaturés et solubles dans l'eau, seuls ou en même temps que des agents de réticulation et/ou éventuellement des monomères monoéthyléniquement insaturés et insolubles dans l'eau, avec des émulsifs eau-dans-huile, que l'on peut obtenir par la conversion de

    (A) d'alcools gras en $C_{10}$ à $C_{22}$ avec l'épichlorhydrine, dans le rapport molaire de 1:0,5 à 1:1,5, en éthers glycidyliques,

    (B) réaction des éthers glycidyliques avec (1) des alcools en $C_2$ à $C_6$, contenant de 2 à 6 radicaux OH, ou (2) leurs monoéthers avec des alcools gras en $C_{10}$ à $C_{22}$, dans le rapport molaire éther glycidylique à (1) ou à (2) de 1:0,5 à 1:6, en présence d'acides ou de bases et

    (C) alcoxylation des produits de la réaction selon (B) avec au moins un oxyde d'alkylène en $C_2$ à $C_4$ dans le rapport molaire de 1:1 à 1:6,

    où éventuellement 5 à 95% des émulsifs eau-dans-huile susmentionnés sont remplacés par d'autres émulsifs eau-dans-huile, dans une phase organique, qui se compose pour au moins de 50% en poids d'une huile d'origine végétale ou animale et on polymérise les monomères de l'émulsion en présence d'amorceurs et éventuellement d'agents mouillants.